(19) **Europäisches Patentamt**
**European Patent Office**
**Office européen des brevets**

(11) **EP 1 688 524 B1**

(12) **EUROPEAN PATENT SPECIFICATION**

(45) Date of publication and mention
of the grant of the patent:
**20.04.2016 Bulletin 2016/16**

(51) Int Cl.:
***D06F 58/24*** *(2006.01)*　　***D06F 37/26*** *(2006.01)*
***D06F 25/00*** *(2006.01)*　　*D06F 58/02* *(2006.01)*

(21) Application number: **05256325.1**

(22) Date of filing: **12.10.2005**

(54) **Washing-drying/drying machine with a condensing device**

Waschmaschine und/oder Trockner mit einer Kondensationseinrichtung

Machine à laver et/ou sécher avec dispositif de condensation

(84) Designated Contracting States:
**DE FR GB**

(30) Priority: **03.02.2005 KR 2005010140**

(43) Date of publication of application:
**09.08.2006 Bulletin 2006/32**

(73) Proprietor: **LG Electronics Inc.**
**Yeongdeungpo-gu, Seoul 07336 (KR)**

(72) Inventors:
• **Lim, Hee Tae**
**Buchun-si**
**Kyungki-do 420-757 (KR)**
• **Hong, Sang Wook**
**Keumchun-ku**
**Seoul 153-031 (KR)**

(74) Representative: **Ter Meer Steinmeister & Partner**
**Patentanwälte mbB**
**Nymphenburger Straße 4**
**80335 München (DE)**

(56) References cited:
**EP-A- 0 969 132**　　**EP-A- 1 544 342**
**DE-A1- 2 304 526**　　**DE-U- 6 600 587**
**DE-U- 6 602 473**　　**FR-A- 2 711 153**
**GB-A- 2 287 476**　　**US-A- 2 644 245**
**US-A- 3 012 333**　　**US-A1- 2003 233 854**
**US-A1- 2004 118 167**

• **PATENT ABSTRACTS OF JAPAN vol. 2003, no. 07, 3 July 2003 (2003-07-03) -& JP 2003 062384 A (HITACHI LTD), 4 March 2003 (2003-03-04)**

**Description**

The present invention relates to a washing-drying/drying machine. It more particularly relates to a washing-drying/drying machine that is capable of condensing air moistened in the course of drying laundry in a tub.

Laundry drying machines are machines that dry clothes or the like (hereinafter, referred to as "laundry"). Based on function, laundry drying machines can be classified into washing-drying machines that wash and dry laundry, and drying machines that only dry the laundry.

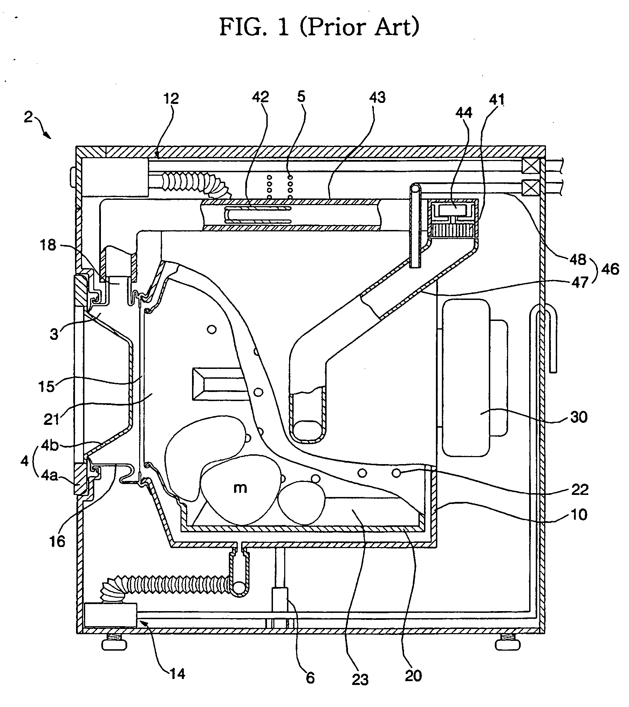

FIG. 1 is a longitudinal sectional view showing an example of a conventional washing-drying machine.

As shown in FIG. 1, the conventional washing-drying machine comprises: a cabinet 2; a tub 10 mounted inside the cabinet for receiving wash water; a drum 20 rotatably disposed in the tub 10 for receiving laundry m; and a motor 30 for rotating the drum 20 while supporting the drum 20.

The cabinet 2 is provided at the front surface thereof with a laundry inlet/outlet hole 3, through which the laundry m is put into or removed from the cabinet 2. At the front surface of the cabinet 2 is mounted a door for opening and closing the laundry inlet/outlet hole 3.

The door 4 comprises: a door frame 4a hingedly connected to the front surface of the cabinet 2; and a door glass 4b attached to the door frame 4a while being protruded in a convex shape toward the rear of the door frame 4a.

The tub 10 is mounted in the cabinet 2 while being suspended by springs 5 connected to the top part of the cabinet 2. Also, the tub 10 is supported by a damper 6, which is mounted at the bottom part of the cabinet 2, in a shock-absorbing fashion.

To the tub 10 is connected a water supply unit 12 for supplying wash water introduced from the outside into the tub 10. To the tub 10 is also connected a water draining unit 14 for draining wash water in the tub 10 out of the washing-drying machine.

The tub 10 is provided at the center of the front surface thereof with a tub-side opening hole 15, through which the laundry m and air is introduced into or discharged from the tub 10. To the front surface of the tub 10 is attached a gasket 16, which comes into tight contact with the door 4, when the door 4 is closed, for preventing the laundry m, the wash water, and the air from being discharged from a gap between the tub 10 and the door 4.

At the center of the front surface of the drum 20 is formed a drum-side opening hole 21, through which the laundry m and air are introduced into or discharged from the drum 20. At the circumferential surface or the rear surface of the drum 20 are formed a plurality of through-holes 22, through which wash water and air are introduced into or discharged from the drum 20.

To the inner wall of the drum 20 are attached lifters 23, by which the laundry m is lifted and then falls.

The motor 30 has a rotary shaft extending through the tub 10 such that the rotary shaft is supported by bearings in the tub 10. The front end of the rotary shaft is connected to the rear surface of the drum 20.

The washing-drying machine further comprises: a drying duct 43, having a circulating fan 41 and a heater 42, for supplying hot wind into the drum 20; and a condenser 46 for condensing air moistened in the course of drying the laundry m in the drum 20 and guiding the condensed air to the drying duct 43.

In the drying duct 43 is mounted a fan motor 44 for rotating the circulating fan 41.

The outlet end of the drying duct 43 is fixedly inserted into or fitted onto a drying duct connection member 18, which is formed at the gasket 16.

The condenser 43 comprises: a condensing duct 47 connected to the side part of the rear part of the tub 10 for allowing air discharged from the tub 10 to pass therethrough; and a cooling water supply unit 48 for supplying cooling water into the condensing duct 47 such that the air passing through the condensing duct 47 is cooled by the cooling water and thus condensed.

The lower end of the condensing duct 47 is connected to the side part of the rear part of the tub 10 at right angles, and the upper end of the condensing duct 47 is connected to the drying duct 43. The condensing duct 47 is disposed between the tub 10 and the cabinet 2 vertically or while being inclined.

The operation of the conventional washing-drying machine with the above-stated construction will be described hereinafter.

When a user puts the laundry m into the drum 20, closes the door 4, selects a washing operation, and operates the washing-drying machine, wash water is introduced into the cabinet 2 through the water supply unit 12.

The introduced wash water is supplied into the tub 10, and is then introduced into the drum 20 through the through-holes 22 of the drum 20 such that the laundry m is wetted by the wash water.

As the motor 30 is operated after the above-described water supply is completed, the drum 20 is rotated, and as a result, the laundry m is shaken in the drum 20, and pollutants are separated from the laundry m by the action of the wash water.

After the above-described washing process is completed, the contaminated wash water in the tub 10 is drained out of the washing-drying machine through the water draining unit 14.

If a rinsing operation is selected by the user, the rinsing process is performed several times for rinsing bubbles from the laundry m. The water supply unit 12 and the motor 30 are controlled in the same fashion as the washing operation such that bubbles are rinsed out of the laundry m, and the contaminated wash water containing the bubbles is drained out of the washing-drying machine through the water draining unit 14.

If a spin-drying operation is selected by the user, the motor 30 is controlled to rotate the drum 20 at high speed. As a result, the laundry m in the drum 20 is pushed against the inner wall of the drum 20, and therefore, moisture is centrifugally separated from the laundry m.

If a drying operation is selected by the user, the drum 20 is rotated by the motor 30, the circulating fan 41 is also rotated, and the drying heater 42 is turned on. Also, the cooling water is supplied through the cooling water supply unit 48.

The cooling water supplied through the cooling water supply unit 48 falls into the condensing duct 47, and the air used to dry the laundry m in the drum 20, i.e., the low-temperature and high-humidity air, is introduced into the condensing duct 47 through the through-holes 22 of the drum 20 and the tub 10 by the rotation of the circulating fan 41. The air is condensed by the cooling water while passing through the condensing duct 47.

After passing through the condensing duct 47, the air passes through the drying duct 43. At this time, the air is heated by the heater 42, and as a result, the air is changed into hot wind. The hot wind passes through the drying duct connection member 18 of the gasket 16, and is then discharged to the inside of the gasket 16. Thereafter, the hot wind strikes the door glass 4b of the door 4, and is blown to the drum 20. The laundry m is dried in the drum 20 by the blown hot wind, and as a result, the hot wind is changed into low-temperature and high-humidity air.

In the conventional washing-drying machine with the above-state construction, however, the capacities of the tub 10 and the drum 20 are decreased by the provision of the condensing duct 47, or the size of the cabinet 2 is increased. Also, flow resistance due to the condensing duct 37 is 30 % to 50 % of the total resistance, which is undesirable.

Furthermore, the cooling water supplied to the condensing duct 47 quickly passes through the condensing duct 47. Consequently, condensing efficiency is lowered, and a large amount of cooling water is wasted.

US2644245, US3012333, FR-A-2711153, JP2003-62384, DE-U-6600587 and DE-U-6602473, which discloses the features of the preamble of claim 1, disclose drying systems in which the moist air from the drying process enters the same space as the cooling water intended for condensing the moisture out of the air. The European parent application EP-A-1-544 342, relevant pursuant to Article 54(3) EPC, discloses a washing machine wherein a tub is provided with an air channel, which is separated from a cooling water channel by a condensing plate.

The present invention seeks to provide an improved washing-drying/washing machine.

A first aspect of the invention provides a washing-drying/drying machine comprising: a tub mounted in a cabinet; a drum rotatably disposed in the tub for receiving laundry; a cooling water supply unit for supplying cooling water to one side of the tub; and a condensing plate mounted at the inner wall of the tub, such that the cooling water supplied to one side of the tub flows between the inner wall of the tub and the condensing plate, for condensing moisture of air used to dry the laundry.

The condensing plate may have a cooling water channel, which is defined between the condensing plate and the inner wall of the tub.

The condensing plate may be provided at the front and rear ends thereof with front and rear bent parts, respectively, which are disposed in contact with the inner wall of the tub.

The tub may have bosses, to which the condensing plate is fixed by means of screws.

The condensing plate may be spaced apart from the inner wall of the tub by a gap, and the gap between the inner wall of the tub and the condensing plate is equal to or greater than a predetermined value such that the cooling water supplied to one side of the tub freely falls between the condensing plate and the inner wall of the tub.

The condensing plate may be spaced apart from the inner wall of the tub by a gap, and the gap between the inner wall of the tub and the condensing plate is less than a predetermined value such that the cooling water supplied to one side of the tub is collected between the condensing plate and the inner wall of the tub due to surface tension, and the collected cooling water falls down along with new cooling water introduced into a space between the condensing plate and the inner wall of the tub.

The condensing plate may have cooling-water guide members, by which the cooling water is drained after uniformly cooling the condensing plate.

The cooling water guide members may be formed to guide the cooling water in a serpentine fashion.

The cooling water guide members may comprise: front-side cooling water guide members inclined downward from the front end of the condensing plate toward the rear end of condensing plate, the lower ends of the front-side cooling water guide members being spaced apart from the rear end of the condensing plate; and rear-side cooling water guide members inclined downward from the rear end of the condensing plate toward the front end of condensing plate, the lower ends of the rear-side cooling water guide members being spaced apart from the front end of the condensing plate.

The condensing plate may be provided with embossed parts.

In accordance with another aspect of the invention, the cooling water supply unit may be mounted at one side of the tub for supplying the cooling water to the tub, the condensing plate, which is cooled by the cooling water, may be mounted at the inner wall of the tub, the air used to dry the laundry may be condensed in the tub by the condensing plate. Consequently, it is unnecessary to mount an additional condensing duct at the outside of the tub, and therefore, the capacities of the tub and the drum are increased or the overall size of the washing-drying/drying machine is decreased. Furthermore, flow resistance of the air used to dry the laundry is reduced, and therefore, drying efficiency of the washing-drying/drying machine is improved while drying time is reduced.

In accordance with another aspect of the invention, the air used to dry the laundry may come into contact with the condensing plate, which has a predetermined surface area, and as a result, the air is condensed. Consequently, a large amount of air can be quickly condensed, and consumption of the cooling water is reduced.

The front and rear ends of the condensing plate may be bent such that front and rear ends of the condensing plate are disposed in contact with the inner wall of the tub. As a result, the cooling water supplied between the condensing plate and the inner wall of the tub is not mixed with air flowing in the tub, and, therefore, the cooling water is not dispersed. Consequently, decrease of drying efficiency, which may be caused when the cooling water is dispersed, is effectively prevented.

The condensing plate may be provided with the bosses, through which the corresponding screws are threadedly inserted. Consequently, the condensing plate is easily and securely fixed to the tub.

The cooling water supplied to one side of the tub may freely fall between the condensing plate and the inner wall of the tub. Consequently, a large amount of cooling water rapidly passes between the condensing plate and the inner wall of the tub, and therefore, moisture contained in the air is quickly condensed.

The cooling water supplied to one side of the tub may be collected between the condensing plate and the inner wall of the tub due to surface tension. As a result, the remaining time of the cooling water in the tub is increased, and therefore, consumption of the cooling water is minimized.

The condensing plate may be provided with the cooling water guide members, which serve to guide the cooling water in a serpentine fashion between the condensing plate and the inner wall of the tub. As a result, the entire condensing plate is cooled by the cooling water. Consequently, moisture is uniformly condensed on the entire surface of the condensing plate, and the moisture is more quickly condensed.

The condensing plate may be provided with the embossed parts. Consequently, heat transfer efficiency of the condensing plate is increased, and therefore, a large amount of moisture is quickly condensed.

Embodiments of the invention will now be described by way of non-limiting example only, with reference to the drawings, in which:

FIG. 1 is a longitudinal sectional view showing an example of a conventional washing-drying machine;
FIG. 2 is a perspective view, partially cutaway, showing a washing-drying/drying machine according a preferred embodiment of the present invention;
FIG. 3 is a cross-sectional view of the washing-drying/drying machine according a preferred embodiment of the present invention;

FIG. 4 is an enlarged perspective view of the tub shown in FIGS. 2 and 3; and
FIG. 5 is an enlarged perspective view of the condensing plate shown in FIG. 3.

In the drawings, the same or similar elements are denoted by the same reference numerals even though they are depicted in different drawings, and a subsequent detailed description thereof will be omitted.

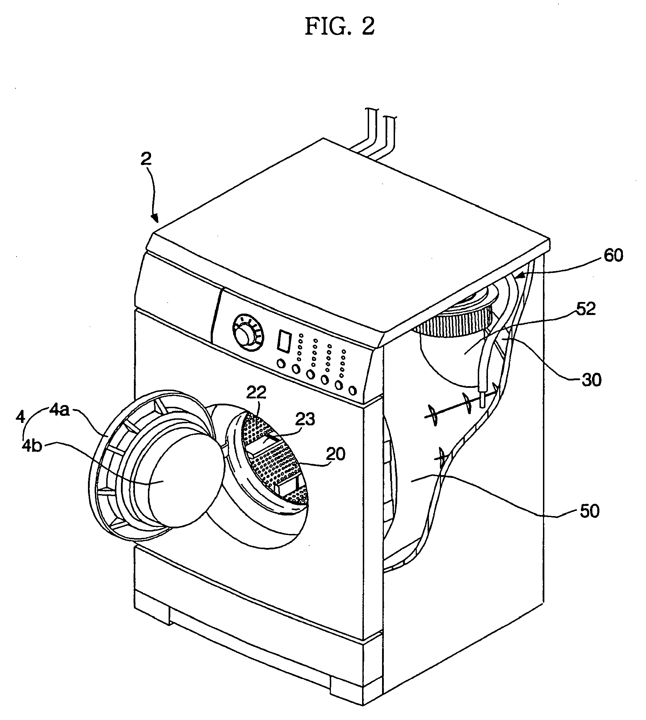

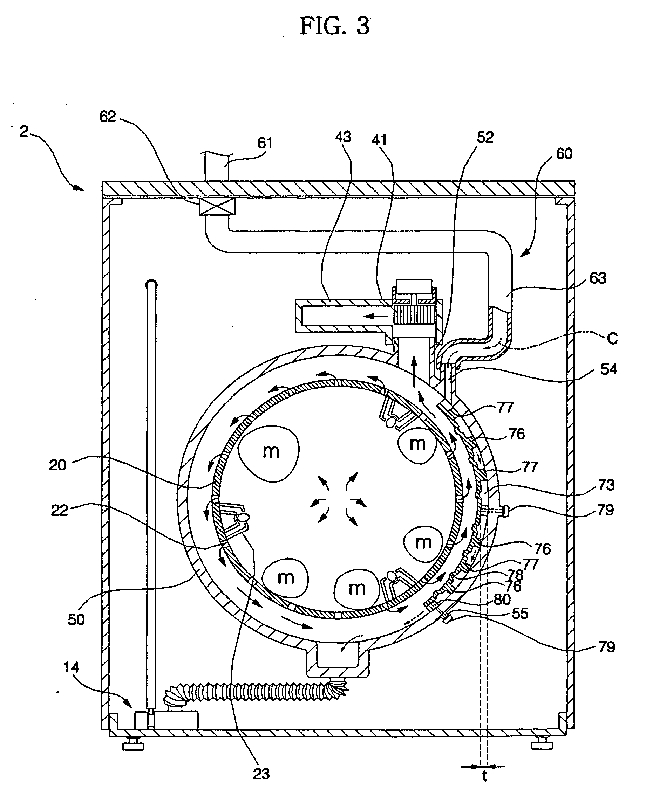

As shown in FIGS. 2 and 3, a tub 50 is mounted in a cabinet 2, and a drum 20 is rotatably disposed in the tub 50 for receiving laundry.

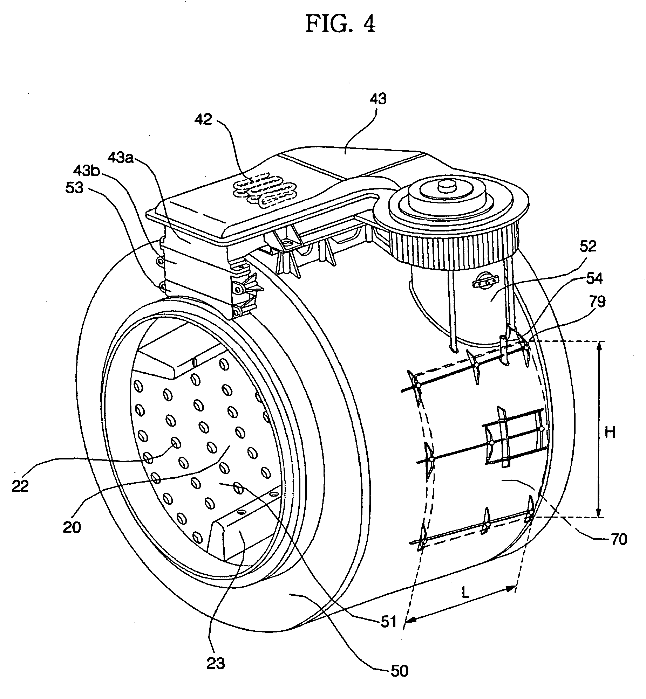

As shown in FIG. 4, the tub 50 has an opening hole 51 formed at the center of the front surface thereof and a first duct communicating member 52 formed at the right or left side of the upper part of the circumference thereof while being protruded outward.

As shown in FIG. 3, the first duct communicating member 52 is preferably formed at the tub 50 in the tangential direction such that the resistance of air introduced into the duct communicating member 52 between the tub 50 and the drum 20 is minimized.

To the first duct communicating member 52 is directly connected a drying duct, in which a circulating fan 41 and a heater 42 are mounted, as shown in FIGS. 3 and 4.

The drying duct 43 has a front part 43a bent downward, and the lower end of the front part 43a is connected to a drying duct connect connection member formed at a gasket 16, as in the conventional washing-drying machine, such that air heated by the heater 42 is supplied into the tub 50 through the drying duct connect connection member formed at the gasket 16. According to the invention, the drying duct 43 is connected to a second duct communicating member 53 formed at the upper part of the front surface of the tub 50 while the drying duct 43 communicates with the second duct communicating member 53 such that air heated by the heater 42 is directly supplied into the tub 50. Alternatively, the drying duct 43 may be connected to a connecting duct 43b mounted at the second duct communicating member 53 while the drying duct 43 communicates with the connecting duct 43b such that air heated by the heater 42 is directly supplied into the tub 50 through the connecting duct 43b, as shown in FIG. 4.

To the tub 50 is connected a cooling water supply unit 60 for supplying cooling water C to one side of the tub 50.

As shown in FIGS. 3 and 4, the tub 50 has a cooling water supplying hole part 54 formed at one side thereof for allowing the cooling water C supplied through the cooling water supply unit 60 to be introduced into the tub therethrough. The cooling water supply unit 60 communicates with the cooling water supplying hole part 54.

The cooling water supplying hole part 54 is formed in the vicinity of the duct communicating member 52.

As shown in FIG. 3, the cooling water supply unit 60 comprises: a cooling water valve 62 connected to an external hose 61 for allowing or interrupting introduction of the cooling water C from the external hose 61 therethrough; and a cooling water hose 63 for guiding the cooling water C passing through the cooling water valve 62 to one side of the tub 50, especially, to the cooling water supplying hole part 54.

Inside the tub 50 is mounted a condensing plate 70 for condensing moisture of the air A used to dry the laundry m. Specifically, the condensing plate 70 is mounted at the inner wall of the tub 50 such that the cooling water C supplied to one side of the tub 50 flows between the inner wall of the tub 50 and the condensing plate 70.

In this embodiment the condensing plate 70 is mounted at the inner wall of the tub 50 under the duct communicating member 52 such that air condensed by the condensing plate 70 is directly introduced into the duct communicating member 52.

In a modification, not shown, the condensing plate 70 may be mounted at the inner wall of the tub 50 under the cooling water supplying hole part 54. Alternatively, the condensing plate 70 may be mounted at the inner wall of the tub 50 by the side of the cooling water supplying hole part 54. In the present embodiment, the condensing plate 70 is mounted at the inner wall of the tub 50 under the cooling water supplying hole part 54.

As shown in FIG. 4, the condensing plate 70 has a predetermined height H such that the upper end of the condensing plate 70 is disposed under the cooling water supplying hole part 54, and the lower end of the condensing plate 70 is disposed at a predetermined position of the inside lower part of the tub 50.

As shown in FIG. 4, the condensing plate 70 also has a predetermined width L such that the front end of the condensing plate 70 is disposed more forward than the duct communicating member 52, and the rear end of the condensing plate 70 is disposed more rearward than the duct communicating member 52.

As shown in FIGS. 2 and 3, the condensing plate 70 is a plate that is bent in the same fashion as the inner wall of the tub 50. The condensing plate 70 may have a radius of curvature greater or less than that of the inner wall of the tub 50, or the condensing plate 70 may have a radius of curvature equal to that of the inner wall of the tub 50. In the present embodiment, the condensing plate 70 has a radius of curvature equal to that of the inner wall of the tub 50.

At the lower end of the condensing plate 70 is formed a cooling water discharging port 72, which is spaced apart from the inner wall of the tub 50.

Between the condensing plate 70 and the inner wall of the tub 50 is defined a cooling water channel 73.

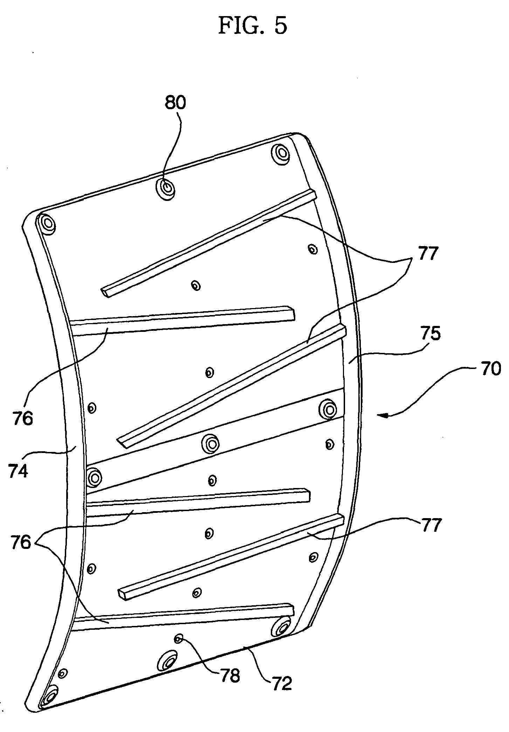

Referring now to Fig 5, at the front end of the condensing plate 70 is formed a front bent part 74, which is disposed in contact with the inner wall of the tub 50, and at the rear end of the condensing plate 70 is formed a rear bent part 75, which is disposed in contact with the inner wall of the tub 50, as shown in FIGS. 3 to 5, such that the condensed water guided between the condensing plate 70 and the inner wall of the tub 50 is not mixed with air flowing in the tub 50, and therefore, the condensed water is not dispersed.

The front bent part 74 and the rear bent part 75 are bent by a press.

The condensing plate 70 has a free falling structure and a surface tension utilizing structure based on a gap (t, Equation 1) between the condensing plate 70 and the tub 50.

The free falling structure is a structure in which the gap t between the inner wall of the tub 50 and the condensing plate 70 is equal to or greater than a predetermined value, and therefore, the cooling water falls between the condensing plate 70 and the inner wall of the tub 50 in the direction of gravity. The surface tension utilizing structure is a structure in which the gap t between the inner wall of the tub 50 and the condensing plate 70 is less than the predetermined value, and therefore, the cooling water is collected between the condensing plate 70 and the inner wall of the tub 50 due to surface tension, and the collected cooling water falls along with new cooling water C introduced into the space between the condensing plate 70 and the inner wall of the tub 50.

## Equation 1

$$x = \frac{4r}{\rho g h t}$$

Where, r is a surface tension constant (0.073), $\rho$ is density of water, g is a coefficient of gravity, h is longitudinal length of the condensing plate, and t is a gap between the tub and the condensing plate.

If x is greater than 0.5, the condensing plate 70 has the free falling structure, and therefore, the cooling water falls between the condensing plate 70 and the inner wall of the tub 50 in the direction of gravity. If x is greater than 0 and not greater than 0.5, on the other hand, the condensing plate 70 has the surface tension utilizing structure, and therefore, the cooling water is collected between the condensing plate 70 and the inner wall of the tub 50 due to a surface tension, and the collected cooling water is introduced into between the condensing plate 70 and the inner wall of the tub 50.

At the condensing plate 70 are formed cooling water guide members 76 and 77, by which the cooling water C is drained after uniformly cooling the condensing plate 70.

The cooling water guide members 76 and 77 are formed at one side surface of the condensing plate 70, which faces the inner wall of the tub 50, while being protruded toward the inner wall of the tub 50.

Each of the cooling water guide members 76 and 77 has a height equal to the gap t, and therefore, the cooling water guide members 76 and 77 are disposed in contact with the inner wall of the tub 50.

Heat exchange between the cooling water C and the condensing plate 70 is performed while the cooling water C remains for a long period of time between the condensing plate 70 and the tub 50 by the cooling water guide members 76 and 77. Most preferably, the cooling water guide members 76 and 77 are formed to guide the cooling water C in a serpentine fashion.

The cooling water guide members 76 and 77 comprise: front-side cooling water guide members 76 inclined downward from the front bent part 74 of the condensing plate 70 toward the rear of condensing plate 70, the lower ends of the front-side cooling water guide members 76 being spaced apart from the rear bent part 75 of the condensing plate 70; and rear-side cooling water guide members 77 inclined downward from the rear bent part 75 of the condensing plate 70 toward the front of condensing plate 70, the lower ends of the rear-side cooling water guide members 77 being spaced apart from the front bent part 74 of the condensing plate 70.

The front-side cooling water guide members 76 are vertically arranged in large numbers while being spaced apart from one another. Similarly, the rear-side cooling water guide members 77 are vertically arranged in large numbers while being spaced apart from one another.

The front-side cooling water guide members 76 and the rear-side cooling water guide members 77 are alternately arranged such that front-side cooling water guide members 76 partially overlap with the corresponding rear-side cooling water guide members 77 in the vertical direction.

At the condensing plate 70 are formed embossed parts 78 for improving heat transfer efficiency of the condensing plate 70.

The embossed parts 78 may be protruded either toward the center of the tub 50 or toward the inner wall of the tub 50. Alternatively, some of the embossed parts 78 may be protruded inward, and the remaining embossed parts 78 may be protruded outward.

The condensing plate 70 is securely fixed to the tub 50 by means of screws 79.

At the condensing plate 70 are formed bosses 80, which are protruded toward the inner wall of the tub 50. The bosses 80 have fixing holes, through which the corresponding screws 79 are threadedly inserted. At the tub 50 are formed bosses 55, which have fixing holes corresponding to the fixing holes of the bosses 80 formed at the condensing plate 70.

Now, the operation of the washing-drying/washing machine with the above-stated construction according to the present invention will be described in detail.

When the cooling water valve 62 is turned on, cooling water C introduced through the external hose 61 passes through the cooling water valve 62 and the cooling water hose 63, and is then supplied to the cooling water supplying hole part 54.

The cooling water C supplied to the cooling water supplying hole part 54 flows downward, is introduced into the space between the condensing plate 70 and the inner wall of the tub 50, and then passes between the condensing plate 70 and the inner wall of the tub 50.

The cooling water C passing between the condensing plate 70 and the inner wall of the tub 50 flows downward in a serpentine fashion by the cooling water guide members 76 and 77 to absorb heat from the entire condensing plate 70, and is then discharged out of the condensing plate 70 through the cooling water discharging port 72 formed at the lower end of the condensing plate 70. Thereafter, the cooling water C is collected in the inside lower part of the tub 50, and is then drained out of the washing-drying/drying machine through the water draining unit 14.

When the drum 20 is rotated simultaneously with the above-described supply of the cooling water C, the laundry m received in the drum 20 is shaken in the drum 20. At this time, the circulating fan 41 is rotated, and therefore, the air A in the drum 20 is blown toward the through-holes 22 of the drum 20 by the blowing pressure generated as the circulating fan 41 is rotated.

The air A moving toward the through-holes 22 of the drum 20 comes into contact with the laundry m. At this time, heat exchange between the air A and the laundry m is performed. As a result, the air A is changed into low-temperature and high-humidity wet air. Subsequently, the low-temperature and high-humidity wet air passes through the through-holes 22 of the drum 20, and then flows between the drum 20 and the tub 50.

The wet air passes by the condensing plate 70, which is cooled by the cooling water C, and therefore, heat is transferred from the wet air to the condensing plate 70. As a result, moisture is condensed on the condensing plate 70, and the wet air is changed into low-humidity air.

The low-humidity air passes through the duct communicating member 52 and the circulating fan 42, and is then blown to the drying duct 43. While passing through the drying duct 43, the low-humidity air is heated by the heater 42. As a result, the low-humidity air is changed into high-temperature and low-humidity air.

The high-temperature and low-humidity air passes through the tub 50, and is then supplied into the drum 20. Thereafter, the above-described drying, condensing, and heating actions are repeated to continuously dry the laundry m.

The condensed water (not shown), which is condensed on the surface of the condensing plate 70, flows downward along the condensing plate 70, and is then drained out of the washing-drying/drying machine together with the cooling water C collected in the inside lower part of the tub 50.

As apparent from the above description, the described washing-drying/drying machine has the following effects.

First, the cooling water supply unit is mounted at one side of the tub for supplying the cooling water to the tub, the condensing plate, which is cooled by the cooling water, is mounted at the inner wall of the tub, the air used to dry the laundry is condensed in the tub by the condensing plate. Consequently, it is unnecessary to mount an additional condensing duct at the outside of the tub, and therefore, the capacities of the tub and the drum are increased or the overall size of the washing-drying/drying machine is decreased. Furthermore, flow resistance of the air used to dry the laundry is minimized, and therefore, drying efficiency of the washing-drying/drying machine is improved while drying time is reduced.

Secondly, the air used to dry the laundry comes into contact with the condensing plate, which has a predetermined surface area, and as a result, the air is condensed. Consequently, a large amount of air is quickly condensed, and consumption of the cooling water is minimized.

Thirdly, the front and rear ends of the condensing plate are bent such that front and rear ends of the condensing plate are disposed in contact with the inner wall of the tub. As a result, the cooling water supplied between the condensing plate and the inner wall of the tub is not mixed with air flowing in the tub, and, therefore, the cooling water is not dispersed. Consequently, decrease of drying efficiency, which may be caused when the cooling water is dispersed, is effectively prevented.

Fourthly, the condensing plate is provided with the bosses, through which the corresponding screws are threadedly inserted. Consequently, the condensing plate is easily and securely fixed to the tub.

Fifthly, the cooling water supplied to one side of the tub freely falls between the condensing plate and the inner wall of the tub. Consequently, a large amount of cooling water rapidly passes between the condensing plate and the inner wall of the tub, and therefore, moisture contained in the air is quickly condensed.

Sixthly, the cooling water supplied to one side of the tub is collected between the condensing plate and the inner wall of the tub due to surface tension. As a result, the remaining time of the cooling water in the tub is increased, and therefore, consumption of the cooling water is reduced.

Seventhly, the condensing plate is provided with the cooling water guide members, which serve to guide the cooling water in a serpentine fashion between the condensing plate and the inner wall of the tub. As a result, the entire condensing plate is cooled by the cooling water. Consequently, moisture is uniformly condensed on the entire surface of the condensing plate, and the moisture is more quickly condensed.

Eighthly, the condensing plate is provided with the embossed parts. Consequently, heat transfer efficiency of the condensing plate is increased, and therefore, a large amount of moisture is quickly condensed.

Although the embodiment of the present invention has been disclosed for illustrative purposes, those skilled in the art will appreciate that various modifications, additions and substitutions are possible, without departing from the scope of the invention as defined in the claims.

## Claims

1. A washing-drying/drying machine comprising:

   a tub (50) mounted in a cabinet (2) having a first duct communicating member (52) formed at the one side of the upper part of the circumference of the tub (5) while being protruded outward, a second duct communicating member (53) formed at the upper part of the tub (50), a drum (20) rotatably disposed in the tub (10) for receiving laundry (m); a drying duct (43) connected to the first duct communicating member (52) and the second duct communicating member (53) in fluid communication to provide a passage for hot air to flow to the tub (50); a heater (42) provided in the drying duct (43) to generate heat air; a circulating fan (41) ; a cooling water supply unit (60) for supplying cooling water (C) to one side of the tub (50); and a condensing plate (70) mounted at the inner wall of the tub (50), such that the cooling water (C) supplied to one side of the tub (50) flows between the inner wall of the tub (50) and the condensing plate (70), for condensing moisture of air used to dry laundry and flowing between the drum (20) and the condensing plate (70); whereby a cooling water channel (73) for flowing the cooling water therethrough is formed between the condensing plate (70) and the inner wall of the tub (50); **characterised in that** the first duct communicating member (52) is formed in tangential direction, the second duct communicating member (53) is formed at the front side of the tub (50), the circulation fan (41) is located between the first duct communicating member (52) and the drying duct (43); and an air channel separated from the cooling water channel (73) is provided between the condensing plate (70) and an outer wall of the drum (20) for upwardly flowing air flowing from the drum (20) to the first duct communicating member (52) therethrough, said air channel being formed such that air exhausted from the drum (20) is condensed by contacting with the condensing plate (70).

2. The washing-drying/drying machine as set forth in claim 1, wherein the condensing plate (70) is provided at the front and rear ends thereof with front and rear bent parts (74, 75), respectively, which are disposed in contact with the inner wall of the tub (50).

3. The washing-drying/drying machine as set forth in claim 1, wherein the tub (50) has bosses (55), to which the condensing plate (70) is fixed by means of screws (79).

4. The washing-drying/drying machine as set forth in 1, wherein the condensing plate (70) is spaced apart from the inner wall of the tub (50) by a gap (t), and the gap (t) between the inner wall of the tub (50) and the condensing plate (70) is equal to or greater than a predetermined value such that the cooling water (C) supplied to one side of the tub (50) freely falls between the condensing plate (70) and the inner wall of the tub (50).

5. The washing-drying/drying machine as set forth in claim 1, wherein the condensing plate (70) is spaced apart from the inner wall of the tub (50) by a gap (t), and the gap (t) between the inner wall of the tub (50) and the condensing plate (70) is less than a predetermined value such that the cooling water (C) supplied to one side of the tub (50) is collected between the condensing plate (70) and the inner wall of the tub (50) due to surface tension, and the collected cooling water falls down along with new cooling water (C) introduced into a space between the condensing plate (70) and the inner wall of the tub (50).

6. The washing-drying/drying machine as set forth in claim 1, wherein the cooling water guide members (76, 77) comprise:

   front-side cooling water guide members (76) inclined downward from the front end of the condensing plate (70) toward the rear end of condensing plate (70), the lower ends of the front-side cooling water guide members (76) being spaced apart from the rear end of the condensing plate (70); and
   rear-side cooling water guide members (77) inclined downward from the rear end of the condensing plate (70) toward the front end of condensing plate (70), the lower ends of the rear-side cooling water guide members (77) being spaced apart from the front end of the condensing plate (70).

7. The washing-drying/drying machine as set forth in claim 1, wherein the condensing plate (70) is provided with embossed parts (78).

**Patentansprüche**

1. Maschine zum Waschen und Trocknen bzw. zum Trocknen, die Folgendes umfasst:

   einen Bottich (50), der in einem Gehäuse (2) angebracht ist, der ein erstes mit dem Rohr in Verbindung stehendes Element (52), das an der einen Seite des oberen Teils des Umfangs des Bottichs (50) in einer tangentialen Richtung gebildet ist, während es nach außen vorsteht, und ein zweites mit dem Rohr in Verbindung stehendes Element (53), das an dem oberen Teil der Vorderseite des Bottichs (50) gebildet ist, besitzt,
   eine Trommel (20), die drehbar in dem Bottich (10) angeordnet ist, um Wäsche (m) aufzunehmen;
   ein Trocknungsrohr (43), das mit dem ersten mit dem Rohr in Verbindung stehenden Element (52) und dem zweiten mit dem Rohr in Verbindung stehenden Element (53) in Fluidkommunikation verbunden ist, um einen Durchlass für heiße Luft bereitzustellen, um zu dem Bottich (50) zu strömen;
   eine Heizung (42), die in dem Trocknungsrohr (43) vorgesehen ist, um erwärmte Luft zu erzeugen;
   ein Umwälzgebläse (41), das sich zwischen dem ersten mit dem Rohr in Verbindung stehenden Element (52) und dem Trocknungskanal (43) befindet;
   eine Kühlwasserzuführeinheit (60) zum Zuführen von Kühlwasser (C) zu einer Seite des Bottichs (50) und
   eine Kondensationsplatte (70), die auf der Innenwand des Bottichs (50) angebracht ist, so dass das Kühlwasser (C), das einer Seite des Bottichs (50) zugeführt wird, zwischen der Innenwand des Bottichs (50) und der Kondensationsplatte (70) strömt, um Feuchtigkeit der Luft, die verwendet wird, um Wäsche zu trocknen, die zwischen der Trommel (20) und der Kondensationsplatte (70) strömt, zu kondensieren; wobei
   ein Kühlwasserkanal (73), um dadurch das Kühlwasser strömen zu lassen, zwischen der Kondensationsplatte (70) und der Innenwand des Bottichs (50) gebildet ist; **dadurch gekennzeichnet, dass** das erste mit dem Rohr in Verbindung stehende Element (52) in einer tangentialen Richtung gebildet ist, das zweite mit dem Rohr in Verbindung stehende Element (53) an der Vorderseite des Bottichs (50) gebildet ist, das Umwälzgebläse (41) sich zwischen dem ersten mit dem Rohr in Verbindung stehenden Element (52) und dem Trocknungskanal (43) befindet und ein Luftkanal, der von dem Kühlwasserkanal (73) getrennt ist, zwischen der Kondensationsplatte (70) und einer Außenwand der Trommel (20) vorgesehen ist, um dadurch Luft, die von der Trommel (20) zu dem ersten mit dem Rohr in Verbindung stehenden Element (52) strömt, strömen zu lassen, wobei der Luftkanal so gebildet ist, dass Luft, die von der Trommel (20) entweicht, durch den Kontakt mit der Kondensationsplatte (70) kondensiert.

2. Maschine zum Waschen und Trocknen bzw. zum Trocknen nach Anspruch 1, wobei die Kondensationsplatte (70) an ihren vorderen und hinteren Enden jeweils mit vorderen und hinteren gebogenen Teilen (74, 75) versehen ist, die in Kontakt mit der Innenwand des Bottichs (50) angeordnet sind.

3. Maschine zum Waschen und Trocknen bzw. zum Trocknen nach Anspruch 1, wobei der Bottich (50) Vorsprünge (55) besitzt, an denen die Kondensationsplatte (70) mittels Schrauben (79) befestigt ist.

4. Maschine zum Waschen und Trocknen bzw. zum Trocknen nach Anspruch 1, wobei die Kondensationsplatte (70) durch einen Spalt (t) getrennt von der Innenwand des Bottichs (50) angeordnet ist und der Spalt (t) zwischen der Innenwand des Bottichs (50) und der Kondensationsplatte (70) gleich oder größer als ein vorgegebener Wert ist, so dass das Kühlwasser (C), das einer Seite des Bottichs (50) zugeführt wird, frei zwischen der Kondensationsplatte (70) und der Innenwand des Bottichs (50) fällt.

5. Maschine zum Waschen und Trocknen bzw. zum Trocknen nach Anspruch 1, wobei die Kondensationsplatte (70) durch einen Spalt (t) getrennt von der Innenwand des Bottichs (50) angeordnet ist und der Spalt (t) zwischen der Innenwand des Bottichs (50) und der Kondensationsplatte (70) kleiner als ein vorgegebener Wert ist, so dass das Kühlwasser (C), das einer Seite des Bottichs (50) zugeführt wird, wegen der Oberflächenspannung zwischen der Kondensationsplatte (70) und der Innenwand des Bottichs (50) gesammelt wird und das gesammelte Kühlwasser zusammen mit neuem Kühlwasser (C), das in einen Raum zwischen der Kondensationsplatte (70) und der Innenwand des Bottichs (50) eingeführt wird, nach unten fällt.

6. Maschine zum Waschen und Trocknen bzw. zum Trocknen nach Anspruch 1, wobei die Kühlwasserführungselemente (76, 77) Folgendes umfassen:

vorderseitige Kühlwasserführungselemente (76), die von dem vorderen Ende der Kondensationsplatte (70) zu dem hinteren Ende der Kondensationsplatte (70) nach unten geneigt sind, wobei die unteren Enden der vorderseitigen Kühlwasserführungselemente (76) getrennt von dem hinteren Ende der Kondensationsplatte (70) angeordnet sind, und

rückseitige Kühlwasserführungselemente (77), die von dem hinteren Ende der Kondensationsplatte (70) zu dem vorderen Ende der Kondensationsplatte (70) nach unten geneigt sind, wobei die unteren Enden der rückseitigen Kühlwasserführungselemente (77) getrennt von dem vorderen Ende der Kondensationsplatte (70) angeordnet sind.

7. Maschine zum Waschen und Trocknen bzw. zum Trocknen nach Anspruch 1, wobei die Kondensationsplatte (70) mit bombierten Teilen (78) versehen ist.

## Revendications

1. Machine à laver-sèche-linge/sèche-linge comprenant :

une cuve (50) montée dans une carrosserie (2) ayant un premier élément de communication formant conduit (52) formé sur un côté de la partie supérieure de la circonférence de la cuve (5) tout en se projetant vers l'extérieur, un second élément de communication formant conduit (53) formé à la partie supérieure de la cuve (50),
un tambour (20) disposé en rotation dans la cuve (10) pour recevoir du linge (m) ;
un conduit de séchage (43) connecté au premier élément de communication formant conduit (52) et au second élément de communication formant conduit (53) en communication fluidique pour assurer un passage pour de l'air chaud qui s'écoule vers la cuve (50) ;
un dispositif de chauffage (42) prévu dans le conduit de séchage (43) pour générer de l'air chaud ;
un ventilateur de circulation (41) ;
une unité d'alimentation d'eau de refroidissement (60) pour alimenter de l'eau de refroidissement (C) vers un côté de la cuve (50) ; et
une plaque de condensation (70) montée sur la paroi intérieure de la cuve (50), de telle façon que l'eau de refroidissement (C) alimentée vers un côté de la cuve (50) s'écoule entre la paroi intérieure de la cuve (50) et la plaque de condensation (70) pour faire condenser l'humidité de l'air utilisé pour sécher le linge et s'écoulant entre le tambour (20) et la plaque de condensation (70) ; grâce à quoi
un canal d'eau de refroidissement (73) pour l'écoulement de l'eau de refroidissement qui le traverse est formé entre la plaque de condensation (70) et la paroi intérieure de la cuve (50) ;
**caractérisé en ce que** le premier élément de communication formant conduit (52) est formé en direction tangentielle, le second élément de communication formant conduit (53) est formé sur le côté avant de la cuve (50), le ventilateur de circulation (41) est situé entre le premier élément de communication formant conduit (52) et le conduit de séchage (43) ; et un canal d'air séparé du canal d'eau de refroidissement (73) est prévu entre la plaque de condensation (70) et une paroi extérieure du tambour (20) pour faire s'écouler vers le haut l'air qui s'écoule depuis le tambour (20) vers le premier élément de communication formant conduit (52) à travers celui-ci, ledit canal d'air étant formé de telle façon que l'air qui s'échappe hors du tambour (20) est amené à condenser par contact avec la plaque de condensation (70).

2. Machine à laver-sèche-linge/sèche-linge selon la revendication 1, dans laquelle la plaque de condensation (70) est pourvue à son extrémité avant et à son extrémité arrière d'une partie cintrée avant et d'une partie cintrée arrière (74, 75), respectivement, qui sont disposées en contact avec la paroi intérieure de la cuve (50).

3. Machine à laver-sèche-linge/sèche-linge selon la revendication 1, dans laquelle la cuve (50) possède des bossages (55) sur lesquels la plaque de condensation (70) est fixée au moyen de vis (79).

4. Machine à laver-sèche-linge/sèche-linge selon la revendication 1, dans laquelle la plaque de condensation (70) est espacée de la paroi intérieure de la cuve (50) par un intervalle (t), et l'intervalle (t) entre la paroi intérieure de la cuve (50) et la plaque de condensation (70) est égal ou supérieur à une valeur prédéterminée de telle façon que l'eau de refroidissement (C) alimentée vers un côté de la cuve (50) tombe librement entre la plaque de condensation (70) et la paroi intérieure de la cuve (50).

5. Machine à laver-sèche-linge/sèche-linge selon la revendication 1, dans laquelle la plaque de condensation (70) est espacée de la paroi intérieure de la cuve (50) par un intervalle (t), et l'intervalle (t) entre la paroi intérieure de la cuve (50) et la plaque de condensation (70) est inférieur à une valeur prédéterminée de telle façon que l'eau de refroidissement (C) alimentée vers un côté de la cuve (50) est collectée entre la plaque de condensation (70) et la paroi intérieure de la cuve (50) en raison des tensions de surface, et l'eau de refroidissement collectée tombe, ensemble avec de l'eau de refroidissement fraîche (C) introduite dans un espace entre la plaque de condensation (70) et la paroi intérieure de la cuve (50).

6. Machine à laver-sèche-linge/sèche-linge selon la revendication 1, dans laquelle les éléments de guidage (76, 77) pour l'eau de refroidissement comprennent :

des éléments de guidage d'eau de refroidissement (76) sur le côté avant, inclinés vers le bas depuis l'extrémité avant de la plaque de condensation (70) vers l'extrémité arrière de la plaque de condensation (70), les extrémités inférieures des éléments de guidage d'eau de refroidissement du côté avant (76) sont espacées de l'extrémité arrière de la plaque de condensation (70) ; et

des éléments de guidage d'eau de refroidissement (77) sur le côté arrière, inclinés vers le bas depuis l'extrémité arrière de la plaque de condensation (70) vers l'extrémité avant de la plaque de condensation (70), les extrémités inférieures des éléments de guidage d'eau de refroidissement (77) sur le côté arrière étant espacées de l'extrémité avant de la plaque de condensation (70).

7. Machine à laver-sèche-linge/sèche-linge selon la revendication 1, dans laquelle la plaque de condensation (70) est dotée de parties embossées (78).

# FIG. 1 (Prior Art)

# FIG. 2

# FIG. 3

# FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2644245 A
- US 3012333 A
- FR 2711153 A
- JP 2003062384 A
- DE 6600587 U
- DE 6602473 U
- EP 1544342 A